# EUROPÄISCHE PATENTANMELDUNG

(11) **EP 0 761 102 A2**
(43) Veröffentlichungstag der Anmeldung: **12.03.1997**
(21) Anmeldenummer: 96114295.7
(22) Anmeldetag: 06.09.1996
(51) Int. Cl.: A23C 19/082

(54) **Snack-Produkt auf Basis einer Käse/Schinken/Brot-Mischung**

(30) Priorität: 07.09.1995 DE 19533074
(71) Anmelder: Ponnath GmbH & Co. KG, 95478 Kemnath (DE)
(72) Erfinder: Ponnath, Michael, 95478 Kemnath (DE); Schmelz, Stefan, 95478 Kemnath (DE)
(74) Vertreter: Hansen, Bernd, Dr. Dipl.-Chem.

(57) **Zusammenfassung**

Es wird ein Snack-Produkt auf Basis einer bißfesten Käse/Schinken/Brot-Mischung bereitgestellt, worin zerkleinerte Schinkenstücken aus gepökeltem, gegarten, getrockneten und geräucherten Fleisch zusammen mit Brotgranulat in eine Käsemasse eingebettet sind.

Das Snack-Produkt ist herstellbar durch ein Verfahren, umfassend die Schritte:
Erhitzen einer Mischung von Käse und Schmelzsalzen unter Verflüssigung der Käsemasse,
Einmengen von zerkleinerten Schinkenstücken aus gepökeltem, gegarten, getrockneten und geräucherten Fleisch und Brotgranulat in die flüssige Käsemasse, und
Abkühlen- und Erstarrenlassen der Mischung.

## Beschreibung

Die Erfindung betrifft ein Snack-Produkt auf Basis einer Käse/Schinken/Brot-Mischung sowie ein Verfahren zu seiner Herstellung.

Für kleinere Pausen- und Zwischenmahlzeiten, sowie für die Nahrungsaufnahme unterwegs wird heutzutage immer häufiger auf industriell vorproduzierte Snacks zugegriffen. Der Verbraucher schätzt an derartigen Produkten vorallem, daß sie praktisch überall erhältlich und relativ lange lagerfähig sind, in handlich abgepackter Form vorliegen und zur Stillung des Hungergefühls geeignet sind. Bekannt sind insbesondere Produkte aus den Süßwarenbereich, wie Schokoladen-, Karamel- oder Müsli-Riegel, in denen Schokolade, andere Süßwarenprodukte, Obst und Getreide miteinander kombiniert sein können. Ferner sind reine Käse-Riegel in Ein-Portionenpackungen (Käsesticks) bekannt. Mischungen aus Fleisch und Käse werden nach dem Verfahren gemäß DE-OS 41 30 448 oder US 1,721,406 erhalten, wobei eine vorbehandelte Fleischeinlage in eine Käsematrix eingebettet wird. DE-OS 43 01 115 offenbart Nahrungsmittelmischungen zum Verzehr in Form von Portionspackungen, wozu im wesentlichen keimfrei vorbehandeltes, granuliertes Brot einer erhitzten Käsezubereitung zugemischt und die Mischung portionsweise im wesentlichen keimfrei verpackt wird. Diese Produkte stellen jedoch keine ernährungsphysiologisch ausgereiften Alternativen dar. Außerdem bietet der Käse-Riegel keine vollständige Mahlzeit, da er in den meisten Fällen mit weiteren Nahrungsmitteln kombiniert wird.

Durch die zunehmende Veränderung der Eßgewohnheiten wird jedoch in zunehmendem Masse nach Produkten verlangt, die ausgewogen sind und Verdauung und Gesamtbefinden nicht belasten und nicht zuletzt hervorragende geschmackliche Eigenschaften aufweisen. Für die industrielle Produktion ist ferner von Bedeutung, daß derartige Produkte schnell und durch eine relativ kurze, unkomplizierte Zubereitungsart fertigzustellen sind, sowie allen maßgeblichen lebensmittelrechtlichen Kriterien entsprechen.

Zur Lösung dieser Aufgabe wird daher erfindungsgemäß ein Snack-Produkt auf Basis einer bißfesten Käse/Schinken/Brot-Mischung bereitgestellt, worin zerkleinerte Schinkenstücke aus gepökeltem, gegarten, getrockneten und geräucherten Fleisch zusammen mit Brotgranulat in eine Käsemasse eingebettet sind.

Ferner umfaßt die Erfindung ein Verfahren zur Herstellung eines derartigen Snack-Produkts, umfassend die Schritte: Erhitzen einer Mischung von Käse und Schmelzsalzen unter Verflüssigung der Käsemasse,
Einmengen von zerkleinerten Schinkenstücken aus gepökeltem, gegarten, getrockneten und geräucherten Fleisch und Brotgranulat in die flüssige Käsemasse, und Abkühlen- und Erstarrenlassen der Mischung.

Als Fleischeinlagen werden Schinkenstücke verwendet, die wie folgt hergestellt werden. Das Rohfleisch, bevorzugt mageres Rind-, Schweinefleisch oder Geflügel, wird nach einem konventionellen Verfahren gepökelt und mechanisch getumbelt. Die weitere Fleischvorbehandlung erfolgt entweder im Stück, kann aber auch nach vorhergehender Zerteilung in kleinere Stücke erfolgen. Das gepökelte und getumbelte Fleisch wird zunächst gegart. Der Garvorgang erfolgt bei einer Temperatur von 60 bis 80 °C, bevorzugt von 75 bis 80 °C. Zur Sicherstellung der mikrobiologischen Stabilität sollte die Kerntemperatur während des Garprogrammes mindestens 64 °C erreichen. Die Garung erfolgt üblicherweise in einer herkömmlichen Delta-T-Kochung im Temperaturbereich von 60 bis 80 °C, die so geführt wird, daß die Kerntemperatur für einen Zeitraum, der für eine vollständige Garung ausreichend ist, bei dem oben genannten Wert von 64 °C oder höher liegt. Hierbei wird das Fleisch vollständig denaturiert ohne daß dessen organoleptischen Eigenschaften verschlechtert werden.

Es hat sich zur Erreichung der gewünschten organoleptischen Eigenschaften und biß- bzw. schnittfesten Konsistenz des Endproduktes als vorteilhaft erwiesen, daß während des ersten Garschrittes ein möglichst geringer Gewichtsverlust (Garverlust) auftritt. Daher wird die relative Feuchte während des Garvorganges möglichst hoch eingestellt, bevorzugt nahe bei 100 %. Die veränderlichen Parameter des Garprogrammes werden so eingestellt, daß das gegarte Fleisch ein Wasser/Eiweißverhältnis von ca. 3,5 bis 4,5 , bevorzugt von ca. 4,0 aufweist.

Wurde das Fleisch im Ganzen gegart, wird es nach dem Abkühlen in kleinere Stücke mit einer Kantenlänge von ca. 0,3 bis ca. 1,5 cm, bevorzugt 0,7 bis 1,2 cm, gewürfelt. Nach dem Zerteilen erfolgt ein weiterer Garschritt bei ca. 60 bis 80° unter Trocknung der Fleischeinlage. Die Fleischstücke werden dazu in einer geeigneten Vorrichtung, vorzugsweise in einem Kochschrank, so lange getrocknet, bis ein Wasser/Eiweißverhältnis von 2,0 bis 3,0 erreicht ist (Wassergehalt ca. 35 bis 55 %). Für die Einbindung der vorbehandelten Schinkenstücke in dem geschmolzenen Käse ist es notwendig, daß die Wasseraufnahmefähigkeit der Fleischstücke erhalten bleibt. Andererseits muß der Feuchtigkeitsgehalt der Schinkeneinlage so eingestellt werden, daß sich zusammen mit dem in die Käsemasse eingearbeiten Brotgranulat ein schnitt- und bißfester Verbund mit den gewünschten organoleptischen Eigenschaften ergibt. Daher werden die kleingeschnittenen Fleischstücke in kontrollierter Weise so getrocknet, daß die Zellstruktur, insbesondere der Oberflächenschichten, möglichst erhalten bleibt. Dies läßt sich durch Verwendung von relativ feuchter Luft im Trockenprozess erzielen. Bevorzugt wird daher der zweite Gar- bzw. Trocknungsschritt mit einer relativen Luftfeuchte von ca. 85 bis 95 %, besonders bevorzugt bei ca. 90 % durchgeführt. Der erste und der zweite Garschritt kann bei bereits vorgeschnittenem, gepökelten Fleisch auch unmittelbar hintereinander in einem Verfahrensschritt kombiniert erfolgen.

Das gegarte, geschnittene und getrocknete Fleisch wird anschließend in einem Standardverfahren geräuchert. Erfindungsgemäß einsetzbare Pökel- und Räucherverfahren sind z.B. in "Technologie der Kochwurst und Kochpökelware", Kulmbacher Reihe Bd. 8, Seiten 53 - 90 und 144 - 164, Institut für Technologie der Bundesanstalt für Fleischforschung (Herausgeber), Kulmbach, 1988, beschrieben.

Im erfindungsgemäßen Verfahrens wird eine flüssige Schmelzkäsemasse zubereitet, in die dann die übrigen Komponenten Schinken und Brotgranulat eingemischt werden. Der Käse für das erfindungsgemäße Snack-Produkt ist bevorzugt ein Naturkäse, insbesondere ein Hart- oder Schnittkäse. Als Schnittkäse, der möglichst mindestens 5-Wochen gereift sein sollte, ist beispielsweise Edamer, Emmentaler geeignet. Bevorzugt wird ein Käse verwendet, der folgende Analysewerte aufweist:

| | |
|---|---|
| Trockenmasse | mind. 53 % |
| Fett | in der Trockenmasse mind. 40 % absolut mind. 21 % |
| Wasser | in der fettfreien Käsemasse: 54 bis 63 % absolut max. 47 % |
| Salz | 1,5 bis 2,0 % |
| pH-Wert | 5,0 bis 5,6 |
| (alle Prozentangaben sind auf das Gewicht bezogen) | |

Zur Herstellung der Käsemasse wird der Käse in einem geeigneten Gerät, beispielsweise einem Kutter, auf eine Korngröße von ca. 2 mm zerkleinert. Dann erhitzt man das Käsegranulat in einer dafür vorgesehenen Vorrichtung, beispielsweise einer Kippfanne, Rührkessel oder Kochkutter. Zu Beginn des Erhitzungsvorganges werden Schmelzsalze, z.B. übliche verträgliche Citrate und/oder Phosphate, in einer Menge von 1 bis 5 Gew.-%, bevorzugt 2 bis 3 Gew.-% eingemischt. Bei einem Käse mit einem relativ geringen Wassergehalt kann gegebenenfalls Wasser in einer Menge von 2 bis 15 Gew.-%, bevorzugt 5 bis 10 Gew.-%, zugegeben werden. Die Angaben in Gew.-% beziehen sich hier auf das Gesamtgewicht des Käse/Schmelzsalz/Wasser-Mischung. Diese Mischung wird auf eine Temperatur von 100 °C oder mehr erhitzt und dadurch geschmolzen. Bevorzugt ist ein Temperaturbereich von 105 bis 130°C.

Wenn der Käse vollständig verflüssigt ist, werden zweckmäßig zunächst die erfindungsgemäß vorbehandelten und zerkleinerten Schinkenstücke hinzugefügt und in die Käsemasse eingearbeitet. Üblicherweise beträgt die Menge der zugegebenen Fleischeinlage 10 bis 50 Gew.-%, bevorzugt 15 bis 30 Gew.-%, bezogen auf die Gesamtmischung.

Anschließend bringt man 5 bis 30 Gew.-%, bevorzugt 5 bis 30 Gew.-% bezogen auf das Gesamtgewicht der aufgeschmolzenen Mischung, Brotgranulat in die Käse/Schinken-Masse ein. Dieses Brotgranulat kann ein reines Vollkorngranulat, oder ein Mischgranulat aus zwei oder mehr verschiedenen Brotsorten sein. Beispiele für die erfindungsgemäß verwendbaren Brotsorten sowie deren Zusammensetzungen (Durchschnittswerte) sind in der folgenden Tabelle angegeben.

| Brotsorte | Wasser | Eiweiß | Kohlenhydrate | Fett | Ballaststoffe |
|---|---|---|---|---|---|
| Roggenvolkornbrot | 45% | 5,5% | 38% | 1% | 8,5% |
| Leinsamenbrot | 45% | 6,5% | 35% | 3% | 9% |
| Fitnessbrot | 43% | 10% | 33% | 5% | 6% |
| 8-Korn-Brot | 45% | 6% | 38,5% | 1,5% | 6,5% |
| Rheinisches Schwarzbrot | 44% | 5,5% | 38,5% | 1% | 8% |
| Sonnenblumenbrot | 43% | 6% | 37% | 3% | 8% |

Die Rezepturen dieser Brotsorten sind wie folgt:
- Roggen-Volkornbrot
   Roggen-Vollkorn, Wasser, Vollkorn-Sauerteig, Salz, Hefe
- Leinsamenbrot
   Roggen- und Weizen-Vollkorn, Wasser, Vollkorn-Sauerteig, Leinsamen, Salz, Hefe
- Fitnessbrot
   Getriedeerzeugnisse: (Hafer- und Roggen-Vollkorn, Weizenkeime), Wasser, Vollkorn-Sauerteig, Soja, Sonnenblumenkerne, Salz, Hefe
- 8-Korn-Brot
   Getreideerzeugnisse: (Roggen, Weizen, Hafer, Dinkel, Reis, Hirse, Gerste, Mais), Wasser, Vollkorn-Sauerteig, Salz, Leinsamen, Hefe
- Rheinisches Schwarzbrot
   Roggen-Vollkorn, Wasser, Vollkorn-Sauerteig, Zuckerrübensirup, Salz, Malzextrakt, Hefe
- Sonnenblumenbrot
   Roggen-Vollkorn, Wasser, Vollkorn-Sauerteig, Sonnenblumenkerne, Zuckerrübensirup, Salz, Malzextrakt, Hefe

Größere Brotstücke werden in einer üblichen Mühle auf die gewünschte Korngröße zu einem Granulat vermahlen. Bevorzugt hat das Brotgranulat eine solche Korngrößenverteilung, daß mindestens 70% der Granulatkörner einen mittleren Durchmesser von 1 bis 3 mm aufweisen.

Das Einmengen von Schinkenstücken und Brotgranulat in die flüssige Käsemasse erfolgt bei einer Temperatur von 105 bis 130°C, gegebenenfalls unter ständiger Hitzezufuhr.

Die so erhaltene, gutvermischte Schinken und Brotgranulat enthaltende Käsemasse kann nun direkt abgegossen und unter Verfestigung abgekühlt werden. Falls gewünscht, kann die Masse zuvor durch Zugabe von weiteren Zutaten sowohl optisch als auch geschmacklich modifiziert werden. Beispiele für derartige Zutaten sind Gewürze, Gewürzmischungen, beispielsweise Sichtgewürze, Paprika, Pfeffer, Curry, Knoblauch usw. Durch Zugabe diese Gewürze wird sowohl eine geschmackliche Variation des enthaltenen Endproduktes ermöglichst, als auch, beispielsweise durch Zugabe von Curry oder Paprikapulver, eine farbliche Beeinflussung des gewünschten Produktes erzielt. Es können auch weitere, bereits fertig vorproduzierte Fleischerzeugnisse in zerkleinerter, insbesondere gewürfelter Form, zugegeben werden. Als derartige Fleischprodukte sind z.B. Wurstwaren geeignet, insbesondere Bierwurst, Rohwurst oder Salami.

Die gewürzte oder ungewürzte Käsemasse mit Schinkenstücken und Brotgranulat wird, sobald alle Zutaten innig mit einander vermischt und von geschmolzenen Käse umhüllt sind, in eine geeignete Form, beispielsweise auf Backbleche oder in Kunststoffhüllen heiß abgefüllt, gegebenenfalls in die gewünschte Form gebracht und abgekühlt. Abfüllen der heißen Masse in Kunststoffhüllen ist bevorzugt, da dies aus bakteriologischer Sicht vorteilhaft ist. Man kann die Masse auch in Formen mit Riegelform verfestigen lassen, so daß nach dem Abkühlen die erstarrte Käse/Schinken/Brotgranulat-Mischung bereits in portionsgerechter Riegelform vorliegt, die dann verpackt und in den Handel gebracht werden. Alternativ wird erst die als großes Stück erstarrte Masse in portionsgerechte Stücke aufgeteilt und verkaufsfertig verpackt. Falls erwünscht, kann das so erhaltene Produkt weiter verarbeitet werden: So können z.B. mehrere Lagen der erfindungsgemäßen Käse/Schinken/Brotgranulat-Mischung, gegebenenfalls mit unterschiedlicher Zusammensetzung, übereinander gelegt werden; oder das Produkt wird mit einem Mantel/Kern-Aufbau ausgebildet. Zur Anhaftung der einzelnen Lagen oder Schichten wird unter Druck noch einmal kurz erhitzt.
Einzelne Lagen oder Schichten in einem derartigen Verbund können auch aus anderen Materialen, wie z.B. einer Vollkorneinlage, ausgebildet sein. Hierdurch lassen sich eine Vielzahl im Aussehen und Geschmack unterschiedlicher Produkte herstellen. Bevorzugt liegt das fertige Produkt in Riegelform mit einem Gewicht von ca. 50 bis 150 g vor, das geeignet verpackt verkaufsfertig ist.
Mit dieser Kombination wird dem Verbraucher ein Snack-Produkt mit hervorragenden Geschmack zur Verfügung gestellt, das ernährungsphysiologisch ausgewogen ist und den Bedürfnissen des Verbrauchers bezüglich leichter Verfügbarkeit sehr entgegen kommt, und somit einen hohen Convenience-Grad aufweist.

### Beispiel:

Ein erfindungsgemäßes Snack-Produkt weist die folgende Zusammensetzung auf:

| | |
|---|---|
| Edamer-Käse (40% Fett i.TM) | 51 Gew.-% |
| Schinkenwürfel 1 cm (gepökelt, gegart, getrocknet und geräuchert) | 20 Gew.-% |
| Vollkorngranulat | 20 Gew.-% |
| Wasser | 7 Gew.-% |
| Schmelzsalz | 2 Gew.-% |
| Verpackungsgröße: Käse-Schinken-Vollkornriegel zu 60 g. | |

## Patentansprüche

1. Verfahren zur Herstellung eines Snack-Produkts auf Basis einer bißfesten Käse/Schinken/Brot-Mischung, umfassend die Schritte:
Erhitzen einer Mischung von Käse und Schmelzsalzen unter Verflüssigung der Käsemasse,
Einmengen von zerkleinerten Schinkenstücken aus gepökeltem, gegarten, getrockneten und geräucherten Fleisch und Brotgranulat in die flüssige Käsemasse, und
Abkühlen- und Erstarrenlassen der Mischung.

2. Verfahren nach Anspruch 1, worin man die Schinkeneinlage wie folgt vorbehandelt:
Pökeln und mechanisches tumbeln von Rohfleisch;
Garen in einem Temperarurbereich von 60 bis 80 °C bis zum Erreichen einer Kerntemperatur von mindestens 64 °C und unter Einstellung eines Wasser/Eiweiß-Verhältnisses von 3,5 bis 4,5;
Trocknen in einem Temperarurbereich von 60 bis 80 °C und einer relativen Luftfeuchte von 85 bis 95 % unter Einstellung eines Wasser/Eiweiß-Verhältnises von 2,0 bis 3,0; und
Räuchern des gegarten und getrockneten Fleisches

3. Verfahren nach Anspruch 2, worin das gepökelte Fleisch zerkleinert und dann das Garen und Trocken unmittelbar nacheinander in einem Verfahrensschritt erfolgt.

4. Verfahren nach Anspruch 1, worin der Käse ein Naturkäse, insbesondere ein Hart- oder Schnittkäse ist.

5. Verfahren nach Anspruch 1, worin man als Schmelzsalze verträgliche Citrate und/oder Phosphate in einer Menge von 1 bis 5 Gew.-%, bevorzugt 2 bis 3 Gew.-%, bezogen auf die Gesamtmenge der Käsemischung zusetzt.

6. Verfahren nach Anspruch 1, worin man beim Vermischen von Käse und Schmelzsalzen zusätzlich Wasser in einer Menge von 2 bis 15 Gew.-%, bevorzugt 5 bis 10 Gew.-%, bezogen auf die Gesamtmenge der Käsemischung zusetzt.

7. Verfahren nach Anspruch 1, worin man zur Verflüssigung der Käsemasse auf eine Temperatur von mehr als 100 °C, bevorzugt 105 bis 130°C, erhitzt.

8. Verfahren nach Anspruch 1, worin das Einmengen von Schinkenstücken und Brotgranulat in die flüssige Käsemasse bei einer Temperatur von 105 bis 130°C, gegebenenfalls unter ständiger Hitzezufuhr, erfolgt.

9. Verfahren nach Anspruch 1, worin man die Schinkenstücke in einer Menge von 10 bis 50 Gew.-%, bevorzugt 15 bis 30 Gew.-%, bezogen auf die Gesamtmenge der Mischung zugibt.

10. Verfahren nach Anspruch 9, worin man die Schinkenstücke gewürfelt mit einer Kantenlänge von ca. 0,3 bis ca. 1,5 cm, bevorzugt 0,7 bis 1,2 cm, zugibt.

11. Verfahren nach Anspruch 1, worin das Brotgranulat ein reines Vollkorngranulat oder ein Brotgranulat aus zwei oder mehr verschiedenen Brotsorten ist.

12. Verfahren nach Anspruch 1, worin man das Brotgranulat in einer Menge von 5 bis 50 Gew.-%, bevorzugt 5 bis 30 Gew.-%, bezogen auf die Gesamtmenge der Mischung, zugibt.

13. Verfahren nach Anspruch 11, worin das Brotgranulat eine solche Korngrößenverteilung hat, daß mindestens 70% der Granulatkörner einen mittleren Durchmesser von 1 bis 3 mm aufweisen.

14. Verfahren nach Anspruch 1, worin zur flüssigen Käse/Schinken/Brotgranulat-Mischung weitere Zutaten zur geschmacklichen und optischen Modifizierung des Snack-Produktes gegeben werden.

15. Verfahren nach Anspruch 14, worin die Zutaten Gewürze, Gewürzmischungen oder bereits vorproduzierte Fleischerzeugnisse in zerkleinerer Form, insbesondere Rohwurst, Bierwurst oder Salami.

16. Snack-Produkt auf Basis einer bißfesten Käse/Schinken/Brot-Mischung, worin zerkleinerte Schinkenstücke aus gepökeltem, gegarten, getrockneten und geräucherten Fleisch zusammen mit Brotgranulat in eine Käsemasse eingebettet sind.

17. Snack-Produkt nach Anspruch 16, erhältlich durch ein Verfahren umfassend die Schritte:
Erhitzen einer Mischung von Käse und Schmelzsalzen unter Verflüssigung der Käsemasse,
Einmengen von zerkleinerten Schinkenstücken aus gepökeltem, gegarten, getrockneten und geräucherten Fleisch und Brotgranulat in die flüssige Käsemasse, und
Abkühlen- und Erstarrenlassen der Mischung.

18. Snack-Produkt nach Anspruch 17, erhältlich durch ein Verfahren nach einem oder mehreren der Ansprüche 1 bis 15.

19. Snack-Produkt nach einem der Ansprüche 16 bis 18 in Form eines Riegels mit einem Gesamtgewicht von 50 bis 150g.

20. Snack-Produkt nach einem der Ansprüche 16 bis 19 mit Schicht- und/oder Mantel/Kern-Aufbau, gegebenfalls unter Mitverwendung weiterer Nahrungsmittelprodukte.
